Europäisches Patentamt

European Patent Office

Office européen des brevets

(19)

(11) Veröffentlichungsnummer : **0 062 848**
**B1**

(12)

# EUROPÄISCHE PATENTSCHRIFT

(45) Veröffentlichungstag der Patentschrift :
29.02.84

(51) Int. Cl.³ : **C 02 F   7/00**

(21) Anmeldenummer : **82102778.6**

(22) Anmeldetag : **01.04.82**

(54) **Verfahren und Vorrichtung zur Sanierung von Oberflächengewässern.**

(30) Priorität : **14.04.81 DE 3115105**

(43) Veröffentlichungstag der Anmeldung :
**20.10.82 Patentblatt 82/42**

(45) Bekanntmachung des Hinweises auf die Patenterteilung : **29.02.84 Patentblatt 84/09**

(84) Benannte Vertragsstaaten :
**AT CH DE FR LI NL**

(56) Entgegenhaltungen :
**CH-A-   324 445**
**DE-A- 2 650 938**

(73) Patentinhaber : **Linde Aktiengesellschaft**
**Abraham-Lincoln-Strasse 21**
**D-6200 Wiesbaden (DE)**

(72) Erfinder : **Berger, Michael, Dr.**
**Ascholdinger Strasse 17a**
**D-8000 München 71 (DE)**
Erfinder : **Blascheck, Reimut**
**Berlinger Weg 30**
**D-8192 Geretsried (DE)**

(74) Vertreter : **Schaefer, Gerhard, Dr.**
**Linde Aktiengesellschaft Zentrale Patentabteilung**
**D-8023 Höllriegelskreuth (DE)**

## Verfahren und Vorrichtung zur Sanierung von Oberflächengewässern

Die Erfindung betrifft ein Verfahren zur Sanierung von Oberflächengewässern, bei dem Tiefenwasser über eine Rohrleitung in einen Vorfluter eingeleitet wird, sowie eine Vorrichtung zur Durchführung des Verfahrens.

Bekanntlich weist ein stehendes Oberflächengewässer im Sommer und Winter drei im wesentlichen konstante Schichten auf, die sich in ihren Sauerstoffgehalten und Temperaturen und damit in den vorhandenen biologischen Lebensgemeinschaften unterscheiden. Dabei weist die oberste, den atmosphärischen Temperaturschwankungen ausgesetzte Wasserschicht, das Epilimnion, aufgrund ihrer Berührung mit der umgebenden Atmosphäre einen relativ hohen Sauerstoffgehalt auf, während die mittlere Wasserschicht, das Metalimnion, bereits deutlich weniger Sauerstoff und die unterste, den Oberflächeneinwirkungen völlig entzogene Wasserschicht, das Hypolimnion, kaum noch Sauerstoff enthält. Im Frühjahr und Herbst werden diese Wasserschichten aufgrund der auftretenden Temperaturänderungen umgewälzt, so daß während der dadurch bedingten Zirkulation des Wassers sauerstoffreiches Wasser auch in die unterste Wasserschicht eingebracht wird.

Durch Störung des biologisches Gleichgewichtes, verursacht durch eine große Abwasserlast und durch natürliche Abschwemmung von intensiv bewirtschafteten Ackerfeldern und Wiesen mit hohen Nährstoffanteilen, deren Düngungseffekt zu einer starken Vermehrung von Wasserpflanzen mit einem daraus resultierenden erheblichen Sauerstoffdefizit des Tiefenwassers führt, hat die unterste Wasserschicht eines Sees aber oft bereits eine solche Ausdehnung, daß die natürliche Wasserumwälzung im Herbst und Frühjahr nicht mehr ausreicht, den Sauerstoffgehalt des Tiefenwassers für die Sommer- und Winterstagnation in ausreichendem Maß zu verbessern.

Zur Behebung des Sauerstoffmangels im Tiefenwasser wurde deshalb bereits versucht, durch auf den Boden eines entsprechenden Gewässers verlegte perforierte Schläuche oder Rohre Luft in das Tiefenwasser einzutragen. Durch die mit der Luftzufuhr bewirkte Umwälzung des Wassers außerhalb der natürlichen Umwälzphasen wird jedoch nährsalzreiches Tiefenwasser an die wärmere Seeoberfläche gefördert und warmes Oberflächenwasser nach unten gebracht. An der warmen Oberflächen nimmt dadurch das Algenwachstum zu, während das warme Wasser in der Tiefe einen zusätzlichen Sauerstoffbedarf verursacht.

Zur Vermeidung dieser Probleme wurde deshalb unter anderem auch dazu übergegangen, daß hypolimnische Tiefenwasser eines Sees über eine ins Tiefenwasser hinabreichende Rohrleitung in einen Vorfluter abzuleiten. Da eine solche Ableitung des Tiefenwassers im Hinblick auf die gesamte Wassermenge eines Sees verhältnismäßig langsam vor sich geht, kommt dabei kaum eine Umwälzung der Wasserschichten außerhalb der natürlichen Umwälzphasen zustande. Mit der Ableitung des Tiefenwassers ist es deshalb möglich, sowohl die unmittelbaren Eutrophierungsfolgen zu bekämpfen, als auch eine allmähliche Senkung des Trophiegrades durch Nährstoffelimination zu erzielen (siehe Verbandsbericht Nr. 77/4, Verband Schweizerischer Abwasserfachleute : Technische Aspekte der Behandlung und Ableitung von Tiefenwasser aus Seen, von Pierre Wildi). Nachteilig bei dieser Verfahrensweise ist jedoch, daß das Tiefenwasser in der Regel eisenhaltig ist und Schwefelwasserstoff enthält. Beim Ableiten des Tiefenwassers kann es deshalb am Ende der Rohrleitung im Vorfluter durch die toxischen Wirkungen des noch gelösten Schwefelwasserstoffs zur Beeinträchtigung des tierischen pflanzlichen Lebens, durch freisetzen von Schwefelwasserstoff zu Geruchsbelästigungen und aufgrund des Eisengehaltes zu Ausflockungen kommen.

Der Erfindung liegt die Aufgabe zugrunde, ein Verfahren der eingangs genannten Art sowie eine Vorrichtung zur Durchführung des Verfahrens so auszugestalten, daß die Tiefenwasserableitung auf einfache und wirtschaftliche Weise ohne Beeinträchtigung eines Vorfluters durchgeführt werden kann.

Diese Aufgabe wird erfindungsgemäß dadurch gelöst, daß das Tiefenwasser vor der Einleitung in den Vorfluter in der Rohrleitung mit Luft und/oder reinem Sauerstoff begast wird.

Die Sauerstoffanreicherung des Tiefenwassers in der Rohrleitung bewirkt eine Oxidation des im Tiefenwasser gelösten Schwefelwasserstoffs sowie eine Enteisenung des Tiefenwassers. Die bisher am Rohrende im Vorfluter auftretenden Probleme können damit effektiv bekämpft werden. Außerdem kann in Abhängigkeit der in die Rohrleitung eingeführten Sauerstoffmenge und des Sauerstoffgehaltes des am Rohrende in den Vorfluter austretenden Tiefenwassers eine Verbesserung der Sauerstoffsituation im Vorfluter erreicht werden. Die Verwendung von Luft, reinem Sauerstoff oder einem Luft-Sauerstoff-Gemisch ist dabei von der notwendigen Sauerstoffaufstockung, d. h. vom Schwefelwasserstoffgehalt des Tiefenwassers abhängig.

Um eine weitgehend quantitative Ausnutzung des eingetragenen Sauerstoffs und eine möglichst lange Reaktionszeit zwischen Sauerstoff und Schwefelwasserstoff zu erzielen, ist es nach einer Ausgestaltung des Erfindungsgedankens zweckmäßig, die Begasung in einem Bereich der Rohrleitung durchzuführen, dem Beginn der Rohrleitung im See zugeordnet ist. Aufgrund des am Beginn der Rohrleitung vorhandenen Wasserdruckes und der relativ langen Aufenthaltszeit des Tiefenwassers in der Rohrleitung wird die rasche und vollständige Auflösung des eingetragenen Sauerstoffs und eine vollständige Oxidation des Schwefelwasserstoffs begünstigt. Außerdem bewirkt eine Sauerstoffeinspeisung am Beginn der Rohrleitung als Folge der unterschiedlichen spezifischen Gewichte des Sauerstoff-Wasser-Gemisches in der Rohrleitung und des Wassers außerhalb der Rohrleitung einen zusätzlichen Auftrieb des abzuleitenden Tiefenwassers, so daß beim Ableiten des Tiefenwassers mittels Heberwirkung durch Aufstauen des zu behandelnden Oberflächengewässers die notwendige Aufstauhöhe und beim Ableiten des Tiefenwassers mittels einer Pumpe die Förderleistung verringert werden kann. Bei geringen Schwefelwasserstoff-Gehalten des Tiefenwassers kann die Begasung jedoch auch nahe dem Ende der Rohrleitung zum Vorfluter vorgesehen werden, vorausgesetzt, daß dann noch eine ausreichende Kontaktzeit zur Oxidation des Schwefelwasserstoffs von der Begasungsstelle bis zum Ende der Rohrleitung im Vorfluter zur Verfügung steht.

Die besten Ergebnisse hinsichtlich einer vollständigen Oxidation des Schwefelwasserstoffs lassen sich erzielen, wenn die Begasung in dem Maß durchgeführt wird, daß eine Sauerstoffaufstockung des Tiefenwassers am Ende der Rohrleitung zum Vorfluter um 1,5 bis 10 mg $O_2$/l erreicht wird. Dazu ist es je nach Lage der Begasungsstelle in der Rohrleitung sowie je nach Menge der in der Rohrleitung abgelagerten Schicht aus anaeroben und aeroben Bakterien zweckmäßig, 5 bis 20 mg $O_2$/l in das in der Rohrleitung abgeleitete Tiefenwasser einzudüsen.

Eine Vorrichtung zur Durchführung des Verfahrens mit einer in einem Oberflächengewässer installierten Rohrleitung zum Ableiten von Tiefenwasser in einen Vorfluter ist erfindungsgemäß dadurch gekennzeichnet, daß die Rohrleitung eine Zuleitung für Luft und/oder reinen Sauerstoff aufweist.

Die Zuleitung steht vorteilhafterweise mit einer in dem Bereich der Rohrleitung angeordneten Begasungseinrichtung in Verbindung, der dem Beginn der Rohrleitung im See zugeordnet ist. Die Zuleitung kann dabei entweder in der Rohrleitung oder außerhalb der Rohrleitung zur Begasungseinrichtung geführt sein. Als Begasungseinrichtung kann beispielsweise ein einfacher Ausströmerschlauch Verwendung finden.

Wird reiner Sauerstoff oder auch ein Luft-Sauerstoff-Gemisch zur Begasung eingesetzt, ist es zweckmäßig, die Zuleitung über eine Meß- und Regeleinrichtung an einen Tank für Flüssigsauerstoff anzuschließen.

Nachstehend wird anhand einer schematischen Darstellung ein Ausführungsbeispiel einer erfindungsgemäßen Vorrichtung zur Durchführung des Verfahrens näher erläutert:

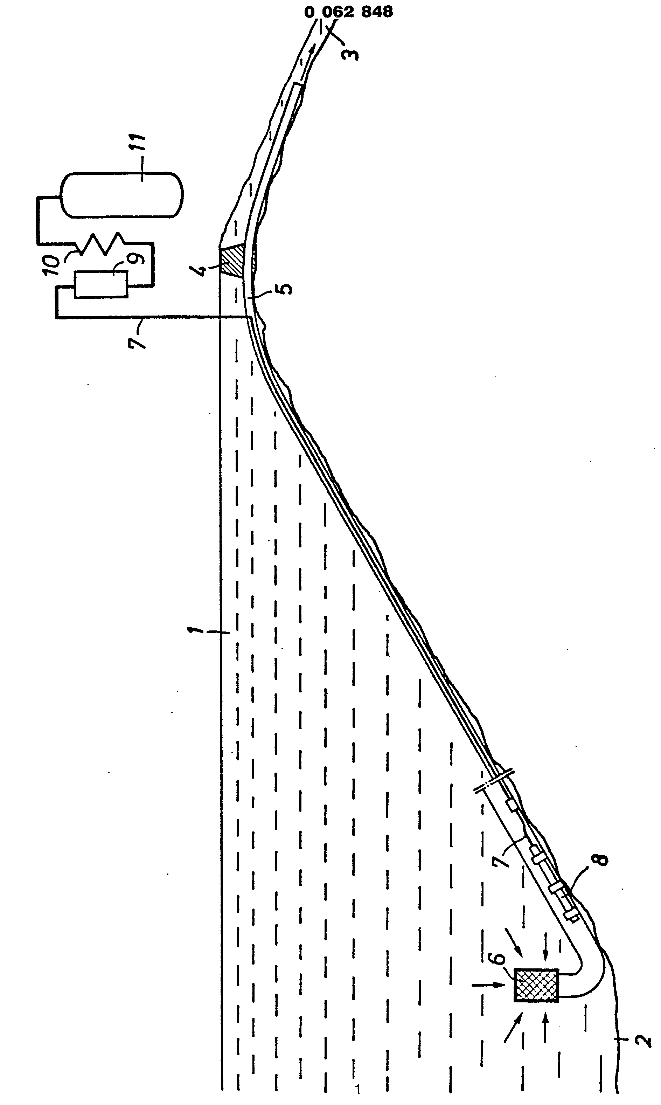

In der Figur ist mit 1 ein im Querschnitt dargestellter See, mit 2 der Seeboden und mit 3 ein natürlicher Ablauf des Sees 1 bezeichnet. Im Ablauf 3 des Sees 1 endet eine Rohrleitung 5, die fast bis zum Seeboden 2 verlegt ist und am Anfangsende eine Siebeinrichtung 6 aufweist. Im Ablauf 3 ist außerdem ein Überlaufwehr 4 angeordnet, so daß durch Absperren des Oberwasserabflusses das epilimnische Wasser bei verstärktem Zufluß in den See 1 das hypolimnische Wasser des Sees 1 über die Rohrleitung 5 in den Ablauf 3 preßt. Falls dabei die mit dem Aufstauen des Oberflächenabflusses erzielte Heberwirkung nicht ausreicht, kann in der Rohrleitung 5 eine Pumpe das Ableiten des hypolimnischen Wassers unterstützen.

In der Rohrleitung 5 ist eine Zuleitung 7 für Sauerstoff verlegt, die im Bereich des Anfangsendes der Rohrleitung 5 in einer Begasungseinrichtung 8, die beispielsweise ein einfacher Ausströmerschlauch sein kann, endet und die an der höchsten Stelle der Rohrleitung 5 aus dieser herausgeführt und über eine Meß- und Regeleinrichtung 9 und einen Verdampfer 10 an einen Tank 11 für Flüssigsauerstoff angeschlossen ist.

Die Anordnung der Begasungseinrichtung 8 am Beginn der Rohrleitung 5 weist folgende Vorteile auf : Der eingeleitete Sauerstoff kann weitgehend quantitativ ausgenützt werden ; da das Tiefenwasser die Rohrleitung 5 erst im Ablauf 3 des Sees 1 verläßt, steht eine lange Reaktionszeit für die Oxidation des im Tiefenwasser gelösten Schwefelwasserstoffs zur Verfügung ; schließlich bewirkt die Sauerstoffeinspeisung am Beginn der Rohrleitung 5 einen zusätzlichen Auftrieb des Tiefenwassers.

Die einzuleitenden Sauerstoffmenge richtet sich dabei nach dem Schwefelwasserstoffgehalt des abzuleitenden Tiefenwassers. Falls der Schwefelwasserstoffgehalt entsprechend gering ist, kann unter Umständen auch eine Luftbegasung oder eine Begasung des Tiefenwassers in der Rohrleitung 5 mit einem Luft-Sauerstoff-Gemisch ausreichen. Ebenso kann dann die Begasungseinrichtung eventuell in der Rohrleitung 5 weiter nach oben verlegt werden, was aber von der benötigten Reaktionszeit zur Oxidation des Schwefelwasserstoffs abhängt.

Zahlenbeispiel

Zur Sanierung eines Sees wurden aus diesen 180 bis 250 m³/h Tiefenwasser mit einem maximalen Schwefelwasserstoffgehalt von 8 mg $H_2S$/l über eine Rohrleitung in einen Vorfluter abgeleitet. Die Rohrleitung hatte eine Länge von 500 m, einen nutzbaren Querschnitt von 0,11 m² und Volumen von ca. 48 m³. Die Strömungsgeschwindigkeit des Tiefenwassers in der Rohrleitung betrug ca. 0,5 m/sec. und die Aufenthaltszeit des Tiefenwassers in der Rohrleitung ca. 16 min.. Der Beginn der Rohrleitung lag in einer Seetiefe von 13 m.

Auf der Basis eines spezifischen Sauerstoffbedarfs zur Oxidation des Schwefelwasserstoffs von 0,5 mg $O_2$/mg $H_2S$ wurde eine Sauerstoffaufstockung des abgeleiteten Wassers um ca. 2 mg $O_2$/l vorgesehen, wodurch sich ein Sauerstoffbedarf von ca. 1,2 kg $O_2$/h ergab. die Einspeisung von reinem Sauerstoff am unteren Ende der Rohrleitung ergab dabei eine quantitative Sauerstoffausnutzung und eine weitestgehende Schwefelwasserstoffoxidation.

## Ansprüche

1. Verfahren zur Sanierung von Oberflächengewässern, bei dem Tiefenwasser über eine Rohrleitung in einen Vorfluter eingeleitet wird, dadurch gekennzeichnet, daß das Tiefenwasser vor der Einleitung in den Vorfluter in der Rohrleitung mit Luft und/oder reinem Sauerstoff begast wird.

2. Verfahren nach Anspruch 1, dadurch gekennzeichnet, daß die Begasung in einem Bereich der Rohrleitung durchgeführt wird, der dem Beginn der Rohrleitung im See zugeordnet ist.

3. Verfahren nach Anspruch 1 oder 2, dadurch gekennzeichnet, daß die Begasung in dem Maß durchgeführt wird, daß eine Sauerstoff-Aufstockung des Tiefenwassers am Ende der Rohrleitung zum Vorfluter um 1,5 bis 10 mg $O_2$/l erreicht wird.

4. Vorrichtung zur Durchführung des Verfahrens nach einem der Ansprüche 1 bis 3 mit einer in einem Oberflächengewässer installierten Rohrleitung zum Ableiten von Tiefenwasser in einen Vorfluter, dadurch gekennzeichnet, daß die Rohrleitung (5) eine Zuleitung (7) für Luft und/oder reinen Sauerstoff aufweist.

5. Vorrichtung nach Anspruch 4, dadurch gekennzeichnet, daß die Zuleitung (7) mit einer in dem Bereich der Rohrleitung (5) angeordneten Begasungseinrichtung (8) in Verbindung steht, der dem Beginn der Rohrleitung (5) im See (1) zugeordnet ist.

6. Vorrichtung nach Anspruch 4 oder 5, dadurch gekennzeichnet, daß die Zuleitung (7) über eine Meß- und Regeleinrichtung (9) an einen Tank (11) für Flüssigsauerstoff angeschlossen ist.

## Claims

1. A process for the rehabilitation of surface waters, in which deep water is introduced into a drainage channel through a pipeline, characterised in that, prior to its introduction into the drainage channel, the deep water is aerated with air and/or pure oxygen in the pipeline.

2. A process according to Claim 1, characterised in that the aeration is carried out in a region of the pipeline which is allotted to the beginning of the pipeline in the sea.

3. A process according to Claim 1 or Claim 2, characterised in that the aeration is carried out to such an extent that an increase in oxygen of the deep water by 1.5 to 10 mg $O_2$/l is achieved at the end of the pipeline to the drainage channel.

4. Apparatus for carrying out the process as claimed in one of Claims 1 to 3 comprising a pipeline which is installed in surface water and which serves to deliver deep water to a drainage channel, characterised in that the pipeline (5) has a feed pipe (7) for air and/or pure oxygen.

5. Apparatus according to Claim 4, characterised in that the feed pipe (7) is connected to an aerating device (8) arranged in the region of the pipeline (5) which is allotted to the beginning of the pipeline (5) in the sea (1).

6. Apparatus according to Claim 4 or Claim 5, characterised in that the feed pipe (7) is connected to a reservoir (11) for liquid oxygen by way of a measuring and control device (9).

## Revendications

1. Procédé pour l'assainissement d'eaux de surface, suivant lequel de l'eau profonde est introduite par l'intermédiaire d'une canalisation dans un canal de dérivation, caractérisé en ce que l'eau profonde est gazéifiée, avant son introduction dans le canal de dérivation, dans la canalisation avec de l'air et/ou de l'oxygène pur.

2. Procédé selon la revendication 1, caractérisé en ce que la gazéification est effectuée dans une zone de la canalisation qui correspond au début de la canalisation dans un lac.

3. Procédé selon l'une des revendications 1 ou 2, caractérisé en ce que la gazéification est effectuée à un degré tel qu'on atteigne, à l'extrémité de la canalisation débouchant dans le canal de dérivation, une teneur en oxygène de l'eau profonde qui soit comprise entre 1,5 et 10 mg $O_2$/l.

4. Dispositif pour la mise en œuvre du procédé selon l'une des revendications 1 à 3, comportant une canalisation installée dans une eau de surface et servant à décharger de l'eau profonde dans un canal de dérivation, caractérisé en ce que la canalisation (5) comporte un tuyau (7) d'air et/ou d'oxygène pur.

5. Dispositif selon la revendication 4, caractérisé en ce que le tuyau d'injection (7) est relié à un dispositif de gazéification (8) placé dans la zone de la canalisation (5) et qui est disposé au début de la canalisation (5) dans le lac (1).

6. Dispositif selon l'une des revendications 4 ou 5, caractérisé en ce que le tuyau d'injection (7) est relié, par l'intermédiaire d'un dispositif de mesure et de régulation (9), à un réservoir (11) d'oxygène liquide.